# EUROPEAN PATENT APPLICATION

(11) **EP 3 407 210 A1**
(43) Date of publication of application: **28.11.2018**
(21) Application number: 17172321.6
(22) Date of filing: 22.05.2017
(51) Int. Cl.: G06F 17/30

(54) **APPARATUS AND METHOD FOR GENERATING A MULTIPLE-EVENT PATTERN QUERY**

(71) Applicant: Fujitsu Limited, Kawasaki-shi, Kanagawa 211-8588 (JP)
(72) Inventor: LLAVES, Alejandro, 28011 Madrid (ES); GARCIA SANTA, Nuria, 28010 Madrid (ES); TORRE, Victor de la, 28007 Madrid (ES)
(74) Representative: Haseltine Lake LLP

(57) **Abstract**

An apparatus, method and program for generating a multiple-event pattern query for use in the retrieval of event information. The apparatus comprises: an inputter configured to receive an input query from a user; a retriever configured to analyse the received input query, and to retrieve an event query template from an event template database on the basis of the analysis; a pattern query formulation unit configured to receive the retrieved event query template, and to modify the event query template using the received input query to formulate the multiple-event pattern query; and a transmitter configured to transmit the multiple-event pattern query to an event information source, such that events matching the multiple-event pattern query may be identified.

## Description

. The invention relates to an apparatus and method for generating a multiple-event pattern query for use in the retrieval of event information. Also disclosed are a computer program which, when executed by a computer, causes the computer to perform the method, and a non-transitory computer readable medium comprising the computer program.

. In recent years the amount of data generated and available for analysis in various technological areas has increased rapidly. This is particularly the case since the advent of the Internet, which has both significantly increased the amount of information generated in various technological areas and has also simultaneously increased the availability of information. The increase in the availability of information may be useful when seeking to analyse the trends and processes in technological areas, or make predictions about future trends.

. Problems may arise as techniques for obtaining and analysing available information, and in particular for filtering out useful information for a given purpose from the available information, have not matched the pace at which the amount of available information has increased. This may lead to issues whereby it is not possible to extract relevant information from all of the available information in a useful time frame, and consequently it may be difficult to obtain, filter and analyse all or the majority of the useful information.

. Some areas in which the problems of filtering useful information from irrelevant information are particularly acute include financial, medical, transport and logistics, and so on. However, equivalent problems may arise in any technological area in which high volumes of data are generated.

. With specific reference to financial analyses, it is necessary to take into account the actions of a large number of different entities such as various companies, banks, government regulators, as well as other factors, in order to fully analyse aspects of financial markets or make useful predictions of future trends. The amount of potentially relevant information generated which may influence financial markets may be large, therefore filtering the information may be a difficult task. Also, the data may be generated in a large number of disparate forms. For example, and taking only the forms which are widely used on the internet in relation to financial markets, useful information may be obtained from disparate and heterogeneous sources such as news reports, RSS feeds, stock trackers, blogs, and so on.

. Because of the large volume of information available, and also the disparate nature of the sources of the information, it may be very difficult for a user to keep up with the flow of information provided and extract useful information from the flow in a reasonable time frame. As a consequence of this, a user may elect to monitor a subset of the available data sources (a single blog or a single stock tracker, for example), however this approach may lead to potentially key information not being monitored and therefore being omitted from a subsequent analysis.

. For the above reasons, it may be desirable to use automated systems to extract events from disparate and heterogeneous information sources, and to standardise the form of the events to allow relevant events (for a given purpose) to be identified. If events that have been converted into a standardised form are available, it is then desirable to provide a system for receiving an input query from a user, and converting this input query into a form which may be used to interrogate events generated in the standardised form to allow relevant events to be identified.

. Embodiments include an apparatus and a method for generating a multiple-event pattern query for use in the retrieval of event information, the apparatus comprising: an inputter configured to receive an input query from a user; a retriever configured to analyse the received input query, and to retrieve an event query template from an event template database on the basis of the analysis; a pattern query formulation unit configured to receive the retrieved event query template, and to modify the event query template using the received input query to formulate the multiple-event pattern query; and a transmitter configured to transmit the multiple-event pattern query to an event information source, such that events matching the multiple-event pattern query may be identified. The apparatus may allow event sources to be accurately and efficiently searched.

. The event query database may be configured to obtain the event query templates by training a machine intelligence using results obtained from unstructured information sources. This provides an effective means for automatically providing a source of events.

. The inputter may comprise a specialised graphical user interface (GUI), and may be configured to receive the input query from the user via the specialised GUI. This provides an intuitive means for the user to input the input query, while also assisting with accurate query input to facilitate the remaining operations of the system.

. If the analysis of the input query indicates that plural event query templates are required, the retriever may be configured to retrieve a plurality of event query templates, and the pattern query formulation unit may be configured to modify the plurality of event query templates to formulate the multiple-event pattern. This allows the system to provide responses to complex queries which may be divided into several sub queries.

. The inputter may be configured to semantically annotate the input query inputted by the user, such that the multiple-event pattern query formulated by the pattern query formulation unit may be used to more accurately retrieve events relevant to the received input query.

. The inputter may be configured to perform an initial check of the structure of the received input query and, if the initial check suggests problems with the structure, to indicate to the user that there may be a problem with the received input query. The inputter may also be further configured to suggest alternative structures for the received input query when the initial check suggests problems with the structure. These features may assist with accurate query entry, particularly for less experienced users.

. The multiple-event pattern query formulated by the pattern query formulation unit may specify a chronological ordering of plural events. The multiple-event pattern query may further specify a time interval threshold into which events satisfying the multiple-event pattern query will fall. This allows the responses to the query to be tailored to the specific area of interest, thereby filtering the most useful responses from the available information.

. The multiple-event pattern query may comprise instructions for the retrieval of provenance information from the event information source for events matching the multiple-event pattern query. The provenance information may be useful to users wishing to assess the reliability of given information.

. The event information may be retrieved from an event stream, allowing the ongoing collection of event information.

### Description of Figures

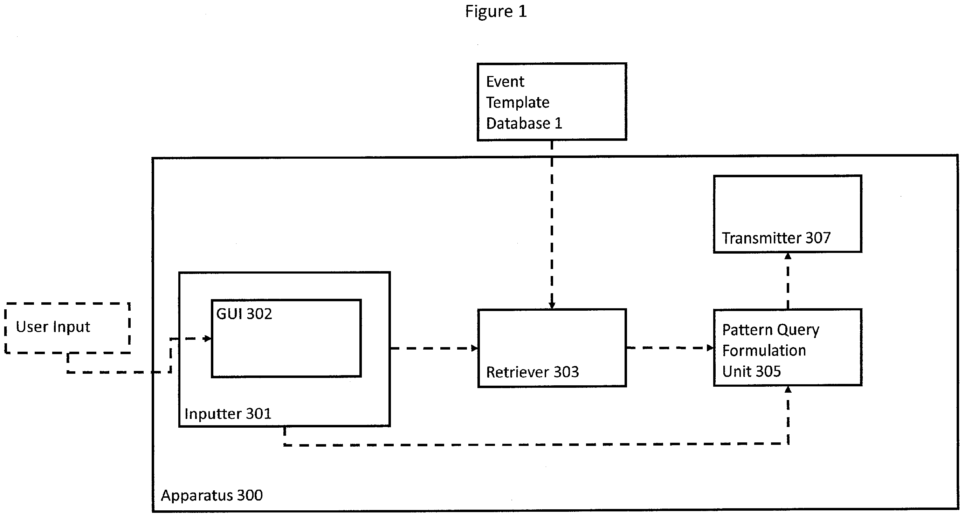

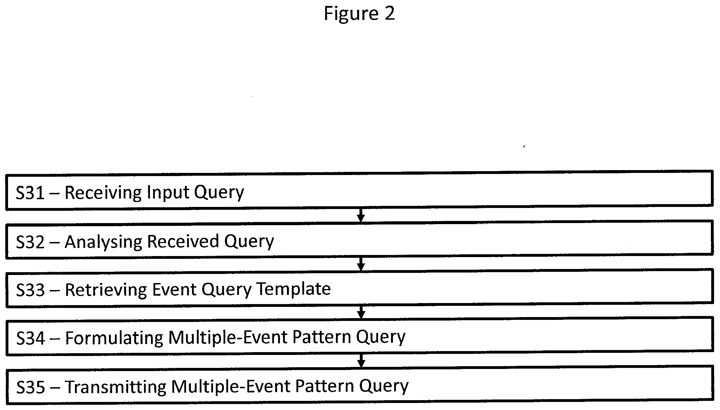

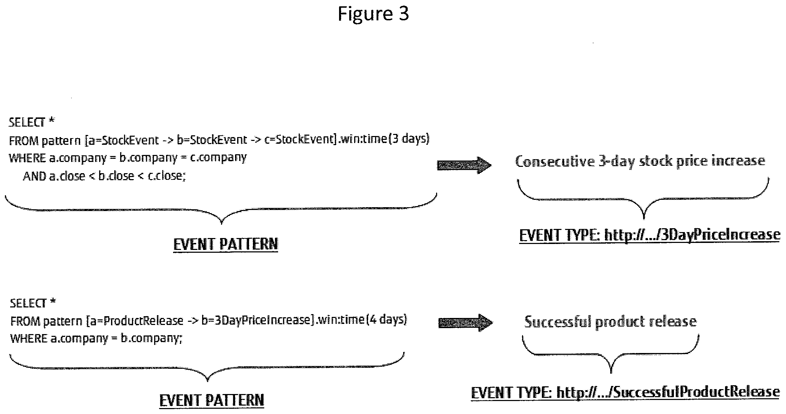

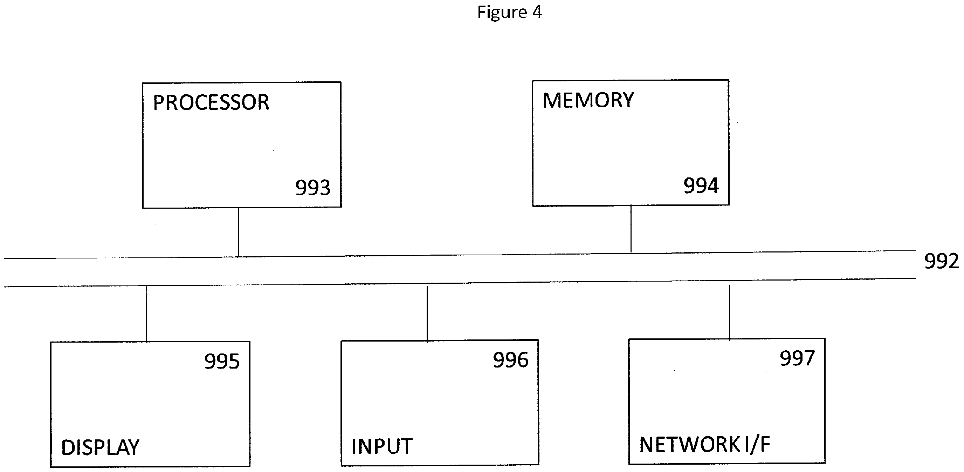

. The invention is described, by way of example only, with reference to the following Figures, in which:
. Fig. 1 is a schematic diagram of an apparatus in accordance with an embodiment.
. Fig. 2 is a flowchart illustrating the generation of multiple-event pattern queries in accordance with an embodiment.
. Fig. 3 is a diagram showing an example of an event pattern.
. Fig. 4 is a block diagram of a computing device which embodies an embodiment.

### . Detailed Description

. The nature of the events which may be identified using multiple-event pattern queries formulated by the system varies between different areas of application. Typically, an event is an occurrence or change of situation which may have ramifications for a given technological area. For example, in the technological area of medical research, an event may relate to the release of a new drug, or to an announcement that a particular drug has been found to cause unwanted side effects. In financial and business related areas, an event may relate to some sort of detectable change in a company, sector or customer behaviour. An example of this may be the release of a new product by a company, or a company completing a merger with another company. Customer specific events may relate to events such as the issuing of a warning of potentially problematic economic circumstances (which may suppress customer spending) or a fluctuation in a currency market.

. By analysing the response of a technological area to particular events, it may be possible to identify future events following a similar pattern at an earlier stage, and thereby predict future occurrences in the technological area on the basis of early identification of these events. This has clear benefits, for example, in terms of dealing in stocks and shares, allowing a company to predict stock requirements or financial reserves required.

. An event pattern is a form of template for ternary information, which maps onto a specific event when generic variables are replaced with specific values. For example, and in a business context, an event pattern may be of the form <unknowncompanyX; sells; unknowncompanyY>. In this event pattern, there are two partially defined entities:
unknowncompanyX and unknowncompanyY. These entities are specified to be of the type "company" but are not limited to a specific company. The two partially defined entities unknowncompanyX and unknowncompanyY may also be referred to as the subject and object respectively. The event pattern also contains an operator (or predicate); in this case "sells". The general form of an event may therefore be abbreviated to <S; P; O>, that is, <Subject; Predicate; Object>. A specific event matching the example event pattern would be of the same general form, but with specific entities in the place of the generic placeholders used above. For example, a specific event matching this event pattern may be of the form <A Ltd.; sells; B Ltd.>. In this event, the subject and object (both entities) are "A Ltd." and "B Ltd." respectively (both defined entities of the type "company"), and the predicate is "sells".

. As evidenced by the explanation above, the event patterns are a technical format, primarily configured to be understandable by computers. As such, the event patterns may be difficult for a user to understand and to intuitively work with. For this reason, even in the case that a database of event information is available, it may be difficult for a user to successfully query this database in order to retrieve useful information. The same is true where, instead of a database, a stream of event information is retrieved from a plurality of disparate sources, such as news blogs, RSS feeds, and so on.

. Typically, a user would formulate a query using natural language, that is, using common terminology and grammar in the same way as the query would be formulated were it to be put to a human respondent. An example of a query in a natural language form would be "how many Spanish companies have had a successful product launch in the last month". While this natural language query is easily understandable by a human user, for a computer the query would not easily be understood, and it would accordingly be difficult for a computer to reliably and efficiently monitor for events which may be relevant to the answer to this query.

. Provided is an apparatus 300 configured to generate a multiple-event pattern query for use in the retrieval of event information, either from an event stream or from a stored database of events. The apparatus 300 is shown in Fig. 1. The apparatus 300 is configured to receive a user input query. Based on this received query, the apparatus 300 is configured to retrieve event query templates which may be relevant to the input query from an event template database 1. Then, utilising a combination of the original input query and the event query template, the apparatus 300 is configured to formulate a multiple-event pattern query (explained in detail below) which may then be transmitted to the database or to a system monitoring an event stream such that relevant events for providing a response to the original input query may be retrieved.

. Fig. 2 shows a flowchart of the method of an embodiment. The first step of the generation of the multiple-event pattern query is the initial receiving of the input query, as shown in step S31. The input query is received by the inputter 301. The primary function of the inputter 301 is to facilitate the entering of the input query into the system by the user. As mentioned above, natural language queries may be difficult for computer systems to consistently and accurately interpret. Accordingly, the inputter 301 is configured to assist a user in inputting a query in a way that may be accurately interpreted by the reamainder of the apparatus 300. Various systems may be used to input the query, such as the display of a simple text box, with text entry operable via a keyboard.

. Optionally the inputter 301 may comprise a graphical user interface (GUI) 302 which is specifically configured to facilitate the entering of the natural language query into the inputter 301 by the user. As an example of the functionality which may be provided by the GUI 302, it is possible for this system to comprise a plurality of drop down menus which a user may select a specific entity (for example "A Ltd.", where A Ltd. is a company), or class of entities (for example "Japanese companies") to be entered into the query. The GUI 302 may also comprise various other settings, such as an option to set a time window of interest over which matching events should be searched for. The exact settings which may be configured using the GUI 302 will depend on the technological area to which the natural language query relates. As such, the inputter 301 may also be linked to a database of entities, such that the user may select known entities from the field of interest to be inputted into the query. Where a GUI 302 is used in the inputting of the initial natural language query, this may make the subsequent generation of the multiple-event pattern query (as discussed below) far simpler. Alternatively, for more skilled users, it may be possible for a user to input a query using a programming language, such as Subject Query Language (SQL) based languages.

. The inputter 301 may be further configured to perform an initial check of the structure of the received input query. That is, the inputter 301 may be configured to ensure that the received input query may be understood, and conforms to known grammatical structures. In the event that the initial checks suggests that there may be problems with the structure, this may be indicated to the user so that the user may reformulate the input query into a form which may be understood by the inputter 301. In the event tha the input query has been written in a SQL based language, the inputter 301 may check the syntax of the query. Optionally, the inputter 301 may be further configured to suggest alternative structures for the same query to the user, such that it is easier for the user to reformulate the query into a structure that may be understood. Again, this is particularly efficient when paired with the GUI 302, because the alternative structures may easily be indicated (using alternative options in selection menus, and so on).

. The inputter 301 may additionally or alternatively be further configured to semantically annotate the input query inputted by the user. That is, the inputter 301 may be configured to either automatically or via further input from the user attach metadata tags to the inputquery explaining the type of information sought. As an example of this, metadata tags could be added indicating the type of information sought as a class type of the event. Again, semantic annotation of the inputquery may improve the retrieval of information in response to the query (once the query has been reformatted into the multiple-event pattern query format).

. Once the inputquery has been received by the inputter 301 as discussed above, and optionally wherein additional semantic annotation has been performed where this is to be used, the query is then passed onto the retriever 303. The retriever 303 is connected to an external database, such as an event template database 1. The external database comprises a plurality of event template types, which are annotated semantically with indications of the type of event to which they relate.

. The external database 1 may include an event term database, which may be used in the identification of predicates. The event term database operates as a glossary of relevant terminology for a given area, and as such the information contained therein is generally area specific. In addition to identifying relevant predicates, the event term database may be used to identify relationships between predicates (such as equivalence or inverse relationships).

. The retriever 303 is configured to analyse the input query, as shown in step S32 of Fig. 2. Based on the information obtained from the initial input query, the retriever 303 interrogates the event template database 1 in order to determine potential event types which may match all or a portion of the input query. Returning to the example discussed above of Spanish companies having successful product launches, the retriever 303 may identify from this example that "product launch" may be relevant to the query. The information from the retained event pattern set may then be retrieved by the retriever 303, as shown in step S33 of Fig. 2. For the above example, the retriever 303 may obtain an event query template relating to "product launches" from the event template database 1. The event query templates retrieved by the retriever 303 are then passed onto the pattern query formulation unit 305.

. Following the analysis of the input query, the retriever 303 may establish that the query appears to relate to multiple event query types. In this event, the retriever 303 may be further configured to retrieve a plurality of event query templates.

. The pattern query formulation unit 305 receives the event query templates from the retriever 303, and also receives the initial input query (along with any semantic annotation if this is available) from the inputter. The pattern query formulation unit 305 then attempts to formulate a multiple-event pattern query utilising the information it has received, as shown in step S34 of Fig. 2.

. A multiple-event pattern query is an event template form containing a plurality of variables. Among the variables, the entities are typically limited by type (for example, an entity known to be a product, an entity known to be a company, and so on) and any predicates involved in the entities may also be similarly limited (for example, related to the acquisition or merger of companies). Returning to the example discussed above of Spanish companies having successful product launches in the last month, a multiple-event pattern query based on this initial input query may include a definition of a successful product launch as, for example, a product launch which is followed chronologically by three consecutive days of increase in the company's stock price. A sample event pattern for a successful product release is shown in Fig. 3. As shown in Fig. 3, the "successful product launch" multiple-event pattern query is based on a further pattern query for a consecutive three days stock price increase. In the present example, this pattern query would be further (geographically) limited to require that the company is known to originate from a specific country, namely Spain.

. In order to satisfy the consecutive three days stock price increase event pattern, three StockEvents are required, each of which relates to a company ("a", "b" or "c" in Fig. 3, wherein "a", "b" and "c" are further required to be the same company).

. Fig. 3 illustrates a further option which may be included in the multiple-event pattern query, wherein the events required to satisfy the query are chronologically ordered. As discussed briefly above, the multiple-event pattern query may be submitted to a database or to an event stream (that is, events being retrieve from heterogeneous sources on an ongoing basis), and may retrieve any event or events which satisfy the query. The chronological requirement places the additional burden that only events which satisfy the variable requirements and also the chronological requirements may be deemed to satisfy the multiple-event pattern query. The temporal ordering in the present example requires that the event for the closing price of the stock ("close") is higher for the second "close" event (chronologically) than the first "close" event, and higher for the third "close" event than the second.

. The "successful product release" pattern further requires that an event that is the release of the product occurs (chronologically) before the consecutive three day stock price increase event. Accordingly, a series of events comprising first the consecutive three day stock price increase and then the release of a product would not satisfy the "successful product release" pattern.

. The above example also has the additional requirement of a time interval threshold into which events satisfying the multiple-event pattern query must fall. In this instance, in order to satisfy the consecutive three day stock price increase pattern query, it is necessary for the stock price rise event to occur on three consecutive days (as indicated by the "win:time(3 days)" requirement. Accordingly, if a day of neutral stock price, falling stock price or simply the absence of knowledge of the stock price were to interrupt the three stock price rise days, this would not satisfy the event criteria.

. A further option which may be implemented in the multiple-event pattern query is the retrieval of provenance information for the events, where said provenance information is available. This is different to the chronological requirements and geographical requirements (for example, reference to companies originating from a specific country, such as Spain) as discussed above. This is because the chronological and geographical requirements are hard requirements; if these requirements are not satisfied by an event, the event cannot be considered to satisfy all or part of the pattern query. By contrast, the provenance requirements are typically soft requirements, not hard requirements. That is, in the event that provenance information is not available, this will not cause patterns satisfying the multiple-event pattern query to be rejected. Other hard and soft requirements may also be used.

. Provenance information is used to indicate the origin of events which are deemed to satisfy the multiple-event pattern query. This information can be useful, for example, where certain sources of events are known to be more reliable than other sources of events. As an example of this, typically information retrieved from a stock market site would be deemed to be more reliable than a personal blog. This information may then be provided to a user once events satisfying the multiple-event pattern query have been retrieved, such that the user may factor the reliability of the source of the event into a subsequent analysis when determining future actions to take.

. Once the multiple-event pattern query has been generated by the pattern query formulation unit 305, the multiple-event pattern query may then be sent to the transmitter 307 for transmission to an event information source, as shown in step S35 of Fig. 2. As discussed above, the event information source may be a database of stored event information (often compiled using events retrieved from plural heterogeneous sources), or may alternatively be an ongoing stream of event information which has been retrieved from plural heterogeneous sources. Typically, although not exclusively, a multiple-event pattern query would require a plurality of events in order to be satisfied. Where a plurality of events satisfying a multiple-event pattern query are detected, these events may then be grouped into an event instance. The event instance may then be passed to the user for subsequent analysis, or alternatively may be stored such that a plurality of event instances satisfying a multiple-event pattern query may be analysed on mass.

. In the present invention, an automated system for receiving input queries and providing queries in multiple-event pattern query form which may be understood and used to interrogate event information sources is provided. When used in conjunction with a system for automatically extracting event information, the combined system allows a far broader range of sources and types of information to be processed than may reasonably be analysed by alternative techniques (such as processing by a human operator). The system therefore allows useful information to be obtained and therefore predictions of future occurrences to be made in an informed way on the basis of available information.

. Applications of the invention are primarily related to fields wherein a large amount of data is generated at a high rate. An example of such a field is the financial or business field, however medical fields, transportation fields and so on may also benefit from applications of the invention. Essentially, the invention may be applied to any field wherein it is useful to retrieve information from a plurality of disparate sources for analysis, and wherein the process of obtaining this information is unduly difficult or time consuming for a human operator.

. Fig. 4 is a block diagram of a computing device, such as a personal computer, which embodies an example, and which may be used to implement an embodiment of the method for generating a multiple-event pattern query. The computing device comprises a processor 993, and memory 994. Optionally, the computing device also includes a network interface 997 for communication with other computing devices, or for computing with remote databases.

. An example may be composed of a network of such computing devices, such that components of the apparatus 300 are split across a plurality of computing devices. Optionally, the computing device also includes one or more input mechanisms such as keyboard and mouse or touchscreen interface 996, and a display unit such as one or more monitors 995. The components are connectable to one another via a bus 992.

. The memory 994 may include a computer readable medium, which term may refer to a single medium or multiple media (e.g., a centralized or distributed database and/or associated caches and servers) configured to carry computer-executable instructions or have data structures stored thereon. The memory 994 may be the same memory 9 as may be used for the storage of the event term database 91, or a separate memory. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices). In particular, the computer readable medium may comprise a computer program which, when executed on a computer, causes the computer to perform a method for generating a multiple-event pattern query as discussed above.

. The processor 993 is configured to control the computing device and execute processing operations, for example executing code stored in the memory to implement the various different functions of the inputter, retriever 303, pattern query formulation unit 305 and transmitter 307 described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

. The display unit 997 may display a representation of data stored by the computing device and may also display a cursor and dialog boxes and screens enabling interaction between a user and the programs and data stored on the computing device. The display unit may also comprise a touchscreen interface. The input mechanisms 996 may enable a user to input data and instructions to the computing device, in particular, to input a natural language query to the inputter.

. The network interface (network I/F) 997 may be connected to a network, such as the Internet, and is connectable to other such computing devices via the network. The network I/F 997 may control data input/output from/to other apparatus 300 via the network. The network interface may also be used in receiving sample event patterns, retrieving terms information, sending generated refined event patterns, selecting raw information and storing events.

. Other peripheral devices such as microphone, speakers, printer, power supply unit, fan, case, scanner, trackerball etc. may be included in the computing device.

. The inputter of Fig. 1 may be a processor 993 (or plurality thereof) executing processing instructions (a program) stored on a memory 994 and exchanging data via a network I/F 997 or bus 992. In particular, the processor 993 may execute processing instructions to receive an input query as discussed above. Furthermore, the processor 993 may execute processing instructions to send the input query to other components within the apparatus 300, such as the pattern query formulation unit 305.

. The retriever 303 of Fig. 1 may be a processor 993 (or plurality thereof) executing processing instructions (a program) stored on a memory 994 and exchanging data via a network I/F 997 or bus 992. In particular, the processor 993 may execute processing instructions to analyse the received input query as discussed above. Furthermore, the processor 993 may execute processing instructions to retrieve an event query template, and to send the retrieved event query template to other components within the apparatus 300, such as the pattern query formulation unit 305.

. The pattern query formulation unit 305 of Fig. 1 may be a processor 993 (or plurality thereof) executing processing instructions (a program) stored on a memory 994 and exchanging data via a network I/F 997 or bus 992. In particular, the processor 993 may execute processing instructions to formulate a multiple-event pattern query as discussed above. Furthermore, the processor 993 may execute processing instructions to send the multiple-event pattern query to other components within the apparatus 300, such as the transmitter 307.

. The transmitter 307 of Fig. 1 may be a processor 993 (or plurality thereof) executing processing instructions (a program) stored on a memory 994 and exchanging data via a network I/F 997 or bus 992. In particular, the processor 993 may execute processing instructions to transmit the multiple-event pattern query to an external event information source as discussed above. Furthermore, the processor 993 may execute processing instructions to store the multiple-event pattern query within the apparatus 300.

. Exemplary methods may be carried out on one or more computing devices such as that illustrated in Fig. 4. Such a computing device need not have every component illustrated in Fig. 4 and may be composed of a subset of those components. A method may be carried out by a single computing device in communication with one or more data storage servers via a network, as discussed above. The scope of the invention is defined by the claims.

## Claims

1. An apparatus configured to generate a multiple-event pattern query for use in the retrieval of event information, the apparatus comprising:
an inputter configured to receive an input query from a user;
a retriever configured to analyse the received input query, and to retrieve an event query template from an event template database on the basis of the analysis;
a pattern query formulation unit configured to receive the retrieved event query template, and to modify the event query template using the received input query to formulate the multiple-event pattern query; and
a transmitter configured to transmit the multiple-event pattern query to an event information source, such that events matching the multiple-event pattern query may be identified.

2. The apparatus of claim 1, wherein the event query database is configured to obtain the event query templates by training a machine intelligence using results obtained from unstructured information sources.

3. The apparatus of any preceding claim, wherein the inputter comprises a specialised graphical user interface, and is configured to receive the input query from the user via the specialised graphical user interface.

4. The apparatus of any preceding claim wherein, if the analysis of the input query indicates that plural event query templates are required, the retriever is configured to retrieve a plurality of event query templates, and the pattern query formulation unit is configured to modify the plurality of event query templates to formulate the multiple-event pattern query.

5. The apparatus of any preceding claim, wherein the inputter is configured to semantically annotate the input query inputted by the user, such that the multiple-event pattern query formulated by the pattern query formulation unit may be used to more accurately retrieve events relevant to the received input query.

6. The apparatus of any preceding claim, wherein the inputter is configured to perform an initial check of the structure of the received input query and, if the initial check suggests problems with the structure, to indicate to the user that there may be a problem with the received input query.

7. The apparatus of claim 6, wherein the inputter is further configured to suggest alternative structures for the received input query when the initial check suggests problems with the structure.

8. The apparatus of any preceding claim, wherein the multiple-event pattern query formulated by the pattern query formulation unit specifies a chronological ordering of plural events.

9. The apparatus of claim 8, wherein the multiple-event pattern query further specifies a time interval threshold into which events satisfying the multiple-event pattern query will fall.

10. The apparatus of any preceding claim, wherein the multiple-event pattern query comprises instructions for the retrieval of provenance information from the event information source for events matching the multiple-event pattern query.

11. The apparatus of any preceding claim, wherein the event information is retrieved from an event stream.

12. A method for generating a multiple-event pattern query for use in the retrieval of event information from an event stream, the method comprising:
receiving an input query;
analysing the received input query;
retrieving an event query template from an event template database on the basis of the analysis;
modifing the event query template using the received input query to formulate the multiple-event pattern query; and
transmitting the multiple-event pattern query to an event information source, such that events matching the multiple-event pattern query may be identified.

13. A computer program which, when executed on a computer, causes the computer to perform a method for generating a multiple-event pattern query in accordance with claim 12.

14. A non-transitory computer readable medium comprising a computer program in accordance with claim 13.
